# EUROPEAN PATENT APPLICATION

(11) **EP 4 628 860 A1**
(43) Date of publication of application: **08.10.2025**
(21) Application number: 25163122.2
(22) Date of filing: 11.03.2025
(51) Int. Cl.: G01K 1/14, G01K 1/08, G01K 7/25

(54) **VARIABLE TEMPERATURE SENSOR**

(30) Priority: 04.04.2024 US 202418627360
(71) Applicant: Caterpillar, Inc., Peoria, IL 61629-6450 (US)
(72) Inventor: DUFFER, Bradly G., East Peoria, 61611 (US); POLOWINCZAK, Allen, New Lenox, 60451 (US); MASLOV, Alexey, Lisle, 60532 (US); TAKANG, Samson T., Peoria, 61614 (US); GANESAN, Chandrasekar, 600096 Chennai (IN)
(74) Representative: Boult Wade Tennant LLP

(57) **Abstract**

A sensor assembly (100) may include a housing (102) and a probe tube (108), disposed in the housing (102), that is positionally adjustable within the housing (102) to dictate a length of a portion of the probe tube (108) that protrudes from the housing (102). The sensor assembly (100) may include a conversion component (124) disposed in the housing (102). The conversion component (124) may be configured to convert an input signal into an application-specific output signal.

## Description

### Technical Field

The present disclosure relates generally to sensors and, for example, to a variable temperature sensor.

### Background

A machine may employ a temperature sensor to collect information related to the temperature of a fluid or a component of the machine, in a switch to open or close an electrical circuit at a threshold temperature, and/or in a temperature sending unit to measure temperature for display on a gauge or other display instrument. Due to the many possible uses and applications, temperature sensors may be produced in various probe lengths and with various output formats. As a result, temperature sensors may be highly application-specific and may lack portability to different use cases. Moreover, maintaining a parts supply of temperature sensors can be challenging, particularly as specifications for temperature sensors change over time and older specifications are phased out.

International Application Publication No. WO2020134400 (the '400 publication) discloses an automobile hub bearing temperature detecting device. The '400 publication indicates that a probe of the detecting device is fastened to a hub bearing, a base is fastened to an axle, and a wire passes through the axle. Furthermore, the probe is electrically connected to a printed circuit board (PCB) main board via the wire, and is used for probing the temperature of the hub bearing and transmitting a probed temperature signal of the hub bearing to the PCB main board. The detecting device of the '400 publication is configured for the purpose of probing the temperature of an automobile hub bearing, but is not reconfigurable for use in different applications.

The sensor assembly of the present disclosure solves one or more of the problems set forth above and/or other problems in the art.

### Summary

A sensor assembly may include a housing having an opening at a first end of the housing and a bore extending through a wall of the housing at a second end of the housing. The sensor assembly may include a probe tube, disposed in the housing, extending through the bore. The sensor assembly may include a stack of one or more spacer elements disposed in the housing. A height of the stack of the one or more spacer elements may dictate a length of a portion of the probe tube protruding from the housing. The sensor assembly may include a temperature sensor disposed in the probe tube. The sensor assembly may include a conversion component disposed in the housing and electrically connected to the temperature sensor. The conversion component may be configured to convert a signal from the temperature sensor into an application-specific output signal.

A system may include a printed circuit board (PCB), a thermistor electrically connected to the PCB, where the thermistor is configured to output a signal, a microcontroller, mounted on the PCB, configured to convert the signal into an application-specific output signal, and a probe tube, thermally coupled to the thermistor, that is positionally adjustable within a housing to dictate a length of a portion of the probe tube that protrudes from the housing.

A sensor assembly may include a housing and a probe tube, disposed in the housing, that is positionally adjustable within the housing to dictate a length of a portion of the probe tube that protrudes from the housing. The sensor assembly may include a conversion component disposed in the housing. The conversion component may be configured to convert an input signal into an application-specific output signal.

### Brief Description of the Drawings

Fig. 1 is a side view of an example sensor assembly.
Fig. 2 is a cross-sectional view of the example sensor assembly of Fig. 1 taken along line A-A.
Fig. 3 is an exploded view of an example sensor assembly.

### Detailed Description

This disclosure relates to a sensor assembly, and is applicable to any machine that uses a temperature sensor to monitor a fluid or a component. For example, the machine may be a work machine, a vehicle, or the like. The sensor assembly is configured such that a connection interface, a probe length, and a format of an output signal of the sensor assembly can be easily modified according to the specifications of a sensing application in which the sensor assembly is to be used.

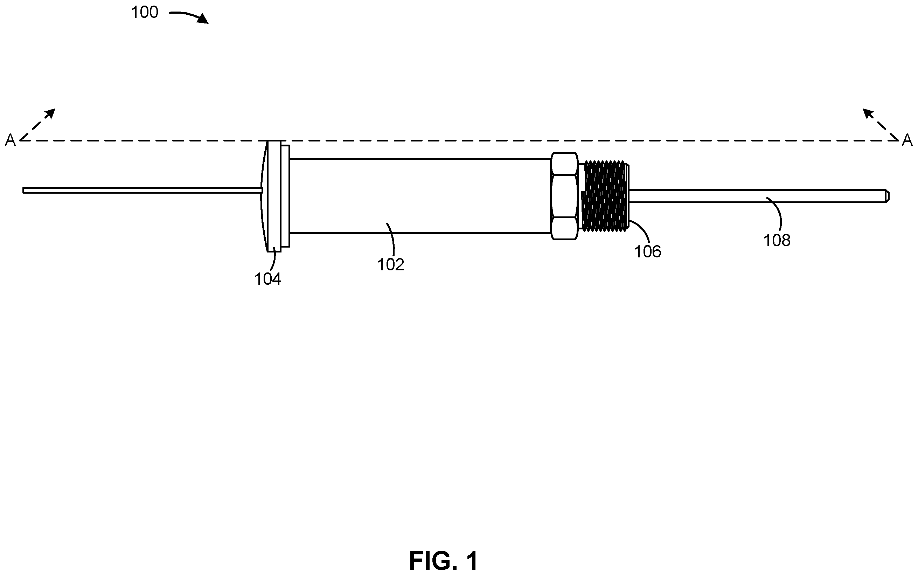

Fig. 1 is a side view of an example sensor assembly 100. As shown, the sensor assembly 100 includes a housing 102. The housing 102 is an enclosure that holds various components of the sensor assembly 100 in an internal chamber defined in the housing 102. The housing 102 may have a generally cylindrical shape, or another shape that allows for a hollow interior to be defined in the housing 102.

A first end of the housing 102 may be enclosed by an end cap 104. An adapter 106 may be attached at a second end of the housing 102. The adapter 106 is a connection interface configured to mate with a port of a component of a machine, thereby connecting the sensor assembly 100 to the component to enable temperature monitoring in connection with the component. For example, an outer circumference of the adapter 106 may have threads configured to mate with threads of the port. The adapter 106 has a particular diameter, and can be swapped with adapters having different diameters, thereby adapting the sensor assembly 100 to be used with ports of various sizes merely through changing adapters.

The sensor assembly 100 includes a probe tube 108 disposed in the housing 102 and extending through a bore in the adapter 106 to protrude from the housing 102. The probe tube 108 may be composed of a thermally-conductive material, such as a metal or a metal alloy. The probe tube 108 may contain a temperature sensor, as described herein. Thus, connecting the sensor assembly 100 to a port positions the probe tube 108 for temperature detection.

As indicated above, Fig. 1 is provided as an example. Other examples may differ from what is described with regard to Fig. 1.

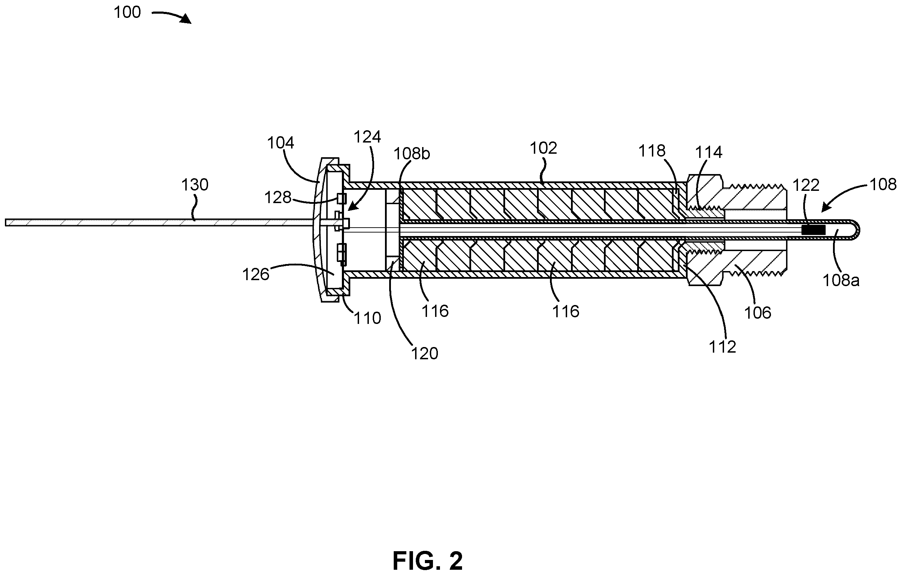

Fig. 2 is a cross-sectional view of the example sensor assembly 100 taken along line A-A. As shown, the housing 102 has an opening at the first end of the housing 102 that is surrounded by a flange 110, and a bore extending through a wall 112 at the second end of the housing 102. As described herein, the opening may be enclosed by the end cap 104. The end cap 104 is removable from the opening to allow access to the internal chamber defined in the housing 102, thereby allowing the sensor assembly 100 to be configured for a particular application. The wall 112 may define an adapter interface 114 that projects from the housing 102 (e.g., projects from the wall 112 in a direction away from the internal chamber defined in the housing 102). The adapter interface 114 may have a cylindrical shape. Thus, the bore extending through the wall 112 may extend through the adapter interface 114. The adapter interface 114 is configured to attach to the adapter 106. For example, the adapter interface 114 may have threads configured to mate with threads on an inner circumference of the adapter 106. When the adapter 106 is attached to the adapter interface 114, the adapter 106 may abut an outer surface of the wall 112.

The probe tube 108, disposed in the housing 102, may extend into and through the bore that extends through the wall 112 and the adapter interface 114. Accordingly, a portion of the probe tube 108 protrudes from the housing 102 to facilitate temperature sensing. The probe tube 108 includes a shaft 108a. The shaft 108a is hollow and is open (e.g., to an interior of the shaft 108a) at a first end of the shaft 108a, that is within the housing 102, and enclosed at a second end of the shaft 108a that protrudes from the housing 102. The probe tube 108 may include a flange 108b surrounding the shaft 108a about the open end of the shaft 108a. The flange 108b may include a sealing surface, or may be surrounded by a separate sealing element (not shown), that is configured to provide a fluid-tight seal between the flange 108b and the internal chamber defined in the housing 102.

The probe tube 108 is positionally adjustable within the housing 102 to dictate a length of a portion of the probe tube 108 that protrudes from the housing 102, thereby allowing the sensor assembly 100 to be configured as needed for a particular application. In one example, the sensor assembly 100 may include a stack of one or more spacer elements 116 (e.g., a plurality of spacer elements 116) disposed in the housing 102, and a height of the stack (e.g., a quantity of spacer elements 116 in the stack) dictates a length of the portion of the probe tube 108 that protrudes from the housing 102. The spacer elements 116 in the stack may have the same proportions as one another, or two or more spacer elements 116 in the stack may have different proportions from each other. A bottom spacer element 116, of the stack of spacer elements 116, may abut the flange 108b of the probe tube 108, and the shaft 108a of the probe tube 108 may extend axially through the stack of spacer elements 116 (e.g., the stack of spacer elements 116 is between the flange 108b and the wall 112 of the housing 102). For example, increasing the number of spacer elements 116 in the stack decreases the length of the portion of the probe tube 108 that protrudes from the housing 102, and decreasing the number spacer elements 116 in the stack decreases the length of the portion of the probe tube 108 that protrudes from the housing 102. In an alternative configuration, a top spacer element 116, of the stack of spacer elements 116, may abut the flange 108b of the probe tube 108 (e.g., the flange 108b is between the stack of spacer elements 116 and the wall 112 of the housing 102), such that increasing the number of spacer elements 116 in the stack increases the length of the portion of the probe tube 108 that protrudes from the housing 102.

A spacer element 116 may have a central aperture (e.g., the spacer element 116 may have a ring shape), and the central aperture may have a minimum diameter that is equal to or less than a diameter of the shaft 108a of the probe tube 108, thereby promoting a fluid-tight seal between the spacer element 116 and the probe tube 108. For example, the central aperture may reduce in diameter from a maximum diameter at a first end of the central aperture to the minimum diameter at a second end of the central aperture. Furthermore, the spacer element 116 may have a projecting center region (e.g., surrounding the second end of the central aperture) configured to nest into a first end of a central aperture of an adjacent spacer element, thereby providing a snug fit between spacer elements 116 in the stack. A spacer element 116 may be composed of rubber (e.g., ethylene propylene diene monomer (EPDM) rubber), plastic, or another non-thermally-conductive material.

The sensor assembly 100 may include a sealing element 118 (e.g., a sealing ring). The sealing element 118 may be on top of the stack of spacer elements 116 and may be considered as part of the stack of spacer elements 116. For example, the sealing element 118 may be similar to a spacer element 116, as described herein, but with a lesser thickness than a spacer element 116. The sealing element 118 may be configured to provide a fluid-tight seal between the bore in the wall 112 of the housing 102, the probe tube 108, and the internal chamber defined in the housing 102. To produce a maximum length of the portion of the probe tube 108 that protrudes from the housing 102, the stack of spacer elements 116 may include only the sealing element 118 and no spacer elements 116. The sensor assembly 100 may include a retaining element 120 (e.g., a retaining ring, a spring-lock washer, a press-fit washer, or the like). The retaining element 120 may abut the flange 108b of the probe tube 108 (e.g., on an opposite side of the flange 108b than a side that is abutted by the stack of spacer elements 116). The retaining element 120 may be configured to maintain a position of the probe tube 108 in the housing 102 (e.g., by a friction fit of the retaining element 120 in the housing 102).

In some implementations, a position of the probe tube 108 in the housing 102 may be maintained and/or adjusted without the use of spacer elements 116. For example, the housing 102 may include a locking mechanism (not shown), such as a chuck, a set screw, or a clamp, among other examples, configured to selectively engage the probe tube 108 and disengage from the probe tube 108. Accordingly, when disengaged from the locking mechanism, the length of the portion of the probe tube 108 that protrudes from the housing 102 can be adjusted, and then locked in place by engaging the locking mechanism. In some implementations, the locking mechanism may be on, a part of, or otherwise integrated with, the adapter interface 114.

An electrical system of the sensor assembly 100 includes a temperature sensor 122 and a conversion component 124 electrically connected to the temperature sensor 122 (e.g., via wires). The temperature sensor 122 may be disposed in the probe tube 108 (e.g., in the shaft 108a). Additionally, or alternatively, the temperature sensor 122 may be located outside of the shaft 108a and thermally coupled to the shaft 108a. The temperature sensor 122 may include a thermistor (e.g., a positive temperature coefficient (PTC) or a negative temperature coefficient (NTC) thermistor) or another type of temperature sensor. The temperature sensor 122 may be configured to output a signal (e.g., an analog voltage signal) correlated to a temperature of a surrounding environment of the probe tube 108. In some implementations, the electrical system may include a type of sensor other than a temperature sensor 122, such as a humidity sensor, a pressure sensor, or the like.

The conversion component 124 may include a PCB 126 and a microcontroller 128 mounted on the PCB 126. Additionally, or alternatively, the conversion component 124 may include an application-specific integrated circuit (ASIC), a field-programmable gate array (FPGA), or the like. In some implementations, the conversion component 124 may include a communication component (e.g., configured for wired or wireless communication), such as a communication interface (e.g., a serial communication interface), mounted on the PCB 126. Electrical connectors 130 (e.g., leads, terminals, or the like) for the conversion component 124 (e.g., that are attached to the PCB 126) may extend through the end cap 104, thereby facilitating connection of the conversion component 124 to an external controller, external switch circuitry, an external gauge, or the like. When the PCB 126 is used in the conversion component 124, the PCB 126 may be arranged on a ledge defined by the flange 110 of the housing 102.

The conversion component 124 may be disposed in the internal chamber defined in the housing 102. In some implementations, the housing 102 may include multiple separate housings, or multiple isolated chambers may be defined in the housing 102. Here, the conversion component 124 may be disposed in a first housing or chamber of the housing 102, and other components of the sensor assembly 100 (e.g., the probe tube 108, the spacer elements 116, or the like) may be disposed in a second housing or chamber of the housing 102. In this arrangement, the conversion component 124 may be more easily accessible to facilitate configuration of the conversion component 124 (e.g., using a serial communication interface, such as controller area networks (CAN)) with a minimal amount of tools or disassembly of the sensor assembly 100.

The conversion component 124 is configured to convert the signal from the temperature sensor 122 (e.g., an input signal) into an application-specific output signal. For example, the microcontroller 128 may be configured to convert the signal into the application-specific output signal, and the PCB 126 may have output circuitry configured to output the application-specific output signal. The signal from the temperature sensor 122 may be an analog voltage signal and the application-specific output signal may be a digital signal, an on-off signal (e.g., for controlling opening and closing of a switch), a digital curve signal, and/or a pulse width modulation (PWM) signal, among other examples. In some implementations, the conversion component 124 (e.g., the microcontroller 128) may receive the signal from the temperature sensor 122 and may modify the signal using one or more signal processing techniques to convert the signal to the application-specific output signal. The conversion component 124 (e.g., the microcontroller 128) may convert the signal to a digital signal (e.g., using an analog-to-digital converter) prior to modifying the signal (e.g., to facilitate signal processing in a digital domain) and/or prior to outputting the signal. In some examples, the conversion component 124 (e.g., the microcontroller 128) may convert the digital signal back to an analog signal (e.g., using a digital-to-analog converter) prior to outputting the signal.

The conversion component 124 (e.g., the microcontroller 128) may be capable of generating a plurality of output signals (e.g., tens of different output signals or hundreds of different output signals), and the application-specific output signal may be one of the plurality of output signals that is selected according to a particular application for which the sensor assembly 100 is to be used. For example, the conversion component 124 (e.g., the microcontroller 128) may be configured with firmware configured to cause conversion of the signal from the temperature sensor 122 into the application-specific output signal, and the firmware may be selected or flashed for the conversion component 124 according to a particular application for which the sensor assembly 100 is to be used. In some implementations, the conversion component 124 is configured to convert the signal from the temperature sensor 122 into one of a plurality of application-specific output signals, and the sensor assembly 100 (e.g., the electrical system of the sensor assembly 100) may include a selection control (not shown), such as a potentiometer, electrically connected to the conversion component 124, that enables selection among the plurality of application-specific output signals.

By enabling reconfiguration of the connection interface, probe length, and/or output signal of sensor assembly 100, the sensor assembly 100 can be tailored to meet the specifications of numerous different sensing applications. Accordingly, the sensor assembly 100 is portable across different use cases and provides near-universal parts coverage, such that the sensor assembly 100 can be used in place of numerous different temperature sensors that would otherwise be provided as separate parts.

As indicated above, Fig. 2 is provided as an example. Other examples may differ from what is described with regard to Fig. 2.

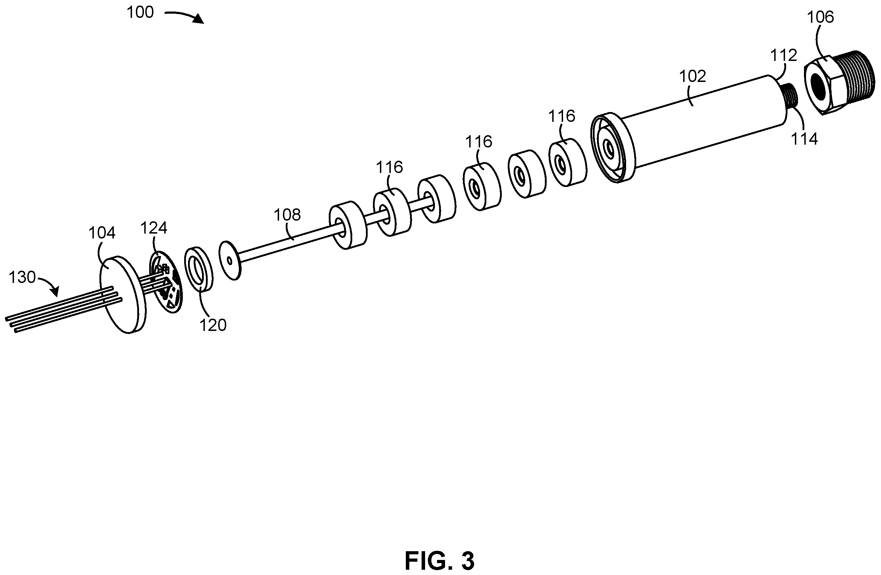

Fig. 3 is an exploded view of the example sensor assembly 100. Fig. 3 shows a manner in which the sensor assembly 100 can be assembled in accordance with a particular application for which the sensor assembly 100 is to be used. For example, with the end cap 104 removed, a selected number of spacer elements 116 (e.g., selected to dictate a length by which the probe tube 108 protrudes from the housing 102, which may be dictated by the particular application for which the sensor assembly 100 is to be used) may be placed into the housing 102. The probe tube 108 may then be placed into the housing 102 inserted through the stack of spacer elements 116 and through the bore in the wall 112 of the housing 102 (e.g., through the adapter interface 114) to protrude from the housing 102. The retaining element 120 may be placed into the housing 102 to retain a position of the probe tube 108. The conversion component 124 may be placed into the housing 102, and the housing 102 may be sealed by the end cap 104 (e.g., with the electrical connectors 130 of the conversion component 124 extending through apertures in the end cap 104). Prior to, or after, placement of the conversion component 124 into the housing 102, the conversion component 124 may be configured to output a particular application-specific output signal (e.g., by loading particular firmware to the conversion component 124). A selected adapter 106 (e.g., selected to fit with a particular port size associated with the particular application for which the sensor assembly 100 is to be used) may be attached to the adapter interface 114 to complete the sensor assembly 100.

As indicated above, Fig. 3 is provided as an example. Other examples may differ from what is described with regard to Fig. 3.

### Industrial Applicability

The sensor assembly described herein may be used with any machine that uses a temperature sensor to monitor a fluid or a component. For example, the sensor assembly may be used as a temperature sensor to collect information related to the temperature of a fluid or a component of a machine, in a switch to open or close an electrical circuit at a threshold temperature, and/or in a temperature sending unit to measure temperature for display on a gauge or other display instrument. In general, temperature sensors may produce outputs in a variety of different formats and may be configured for installation into a variety of different components. Accordingly, temperature sensors may be highly application-specific and may lack portability to different use cases. Moreover, to facilitate servicing of various temperature sensors, there may be a need to maintain an extensive parts supply to accommodate replacement of the temperature sensors when an end of life is reached.

The sensor assembly described herein has a variable configuration that can be tailored to meet the specifications of numerous different sensing applications. In particular, the sensor assembly is configured such that a connection interface, a probe length, and a format of an output signal of the sensor assembly can be easily modified according to the specifications of a sensing application in which the sensor assembly is to be used. In this way, the sensor assembly is portable across different use cases and provides near-universal parts coverage, such that the sensor assembly can be used in place of numerous different temperature sensors that would otherwise be provided as separate parts. Accordingly, the sensor assembly facilitates a reduced parts inventory.

The foregoing disclosure provides illustration and description, but is not intended to be exhaustive or to limit the implementations to the precise forms disclosed. Modifications and variations may be made in light of the above disclosure or may be acquired from practice of the implementations. Furthermore, any of the implementations described herein may be combined unless the foregoing disclosure expressly provides a reason that one or more implementations cannot be combined. Even though particular combinations of features are recited in the claims and/or disclosed in the specification, these combinations are not intended to limit the disclosure of various implementations. Although each dependent claim listed below may directly depend on only one claim, the disclosure of various implementations includes each dependent claim in combination with every other claim in the claim set.

As used herein, "a," "an," and a "set" are intended to include one or more items, and may be used interchangeably with "one or more." Further, as used herein, the article "the" is intended to include one or more items referenced in connection with the article "the" and may be used interchangeably with "the one or more." Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of"). Further, spatially relative terms, such as "top," "bottom," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly.

## Claims

1. A sensor assembly (100), comprising:
a housing (102) having an opening at a first end of the housing (102) and a bore extending through a wall (112) of the housing (102) at a second end of the housing (102);
a probe tube (108), disposed in the housing (102), extending through the bore,
a temperature sensor (122) disposed in the probe tube (108); and
a conversion component (124) disposed in the housing (102) and electrically connected to the temperature sensor (122),
the conversion component (124) configured to convert a signal from the temperature sensor (122) into an application-specific output signal.

2. The sensor assembly (100) of claim 1, further comprising a locking mechanism configured to selectively engage the probe tube (108) and disengage from the probe tube (108).

3. The sensor assembly (100) of any of claims 1-2, further comprising a stack of one or more spacer elements (116) disposed in the housing (102), a height of the stack of the one or more spacer elements (116) dictating a length of a portion of the probe tube (108) protruding from the housing (102),
wherein the probe tube (108) includes a shaft (108a) surrounded by a flange (108b), and
wherein the stack of the one or more spacer elements (116) abuts the flange (108b), and the shaft (108a) extends axially through the stack of the one or more spacer elements (116).

4. The sensor assembly (100) of claim 3, wherein the stack of the one or more spacer elements (116) comprises a plurality of spacer elements (116).

5. The sensor assembly (100) of any of claims 1-4, wherein the wall (112) at the second end of the housing (102) defines an adapter interface (114) that projects from the housing (102), the sensor assembly (100) further comprises an adapter (106) attached to the adapter interface (114), and the adapter (106) is configured to attach the sensor assembly (100) to a port.

6. A system, comprising:
a printed circuit board (PCB) (126);
a thermistor (122) electrically connected to the PCB (126),
the thermistor (122) configured to output a signal;
a microcontroller (128), mounted on the PCB (126), configured to convert the signal into an application-specific output signal; and
a probe tube (108), thermally coupled to the thermistor (122), that is positionally adjustable within a housing (102) to dictate a length of a portion of the probe tube (108) that protrudes from the housing (102).

7. The system of claim 6, wherein the microcontroller (128) is configured with firmware configured to cause conversion of the signal into the application-specific output signal.

8. The system of any of claims 6-7, wherein the PCB (126), the microcontroller (128), and the probe tube (108) are disposed in the housing (102), and the thermistor (122) is disposed in the probe tube (108).

9. The system of any of claims 6-8, wherein the microcontroller (128) is configured to convert the signal into one of a plurality of application-specific output signals, and
wherein the system further comprises a selection control that enables selection among the plurality of application-specific output signals.

10. The system of any of claims 6-9, wherein the microcontroller (128) has a capability to generate a plurality of application-specific output signals, and the application-specific output signal is one of the plurality of application-specific output signals.
